# EUROPEAN PATENT APPLICATION

(11) **EP 1 780 538 A1**
(43) Date of publication of application: **02.05.2007**
(21) Application number: 06255450.6
(22) Date of filing: 23.10.2006
(51) Int. Cl.: G01N 27/90

(54) **Eddy current inspection apparatus and methods**

(30) Priority: 27.10.2005 US 260096
(71) Applicant: General Electric Company, Schenectady, NY 12345 (US)
(72) Inventor: Viertl, John Ruediger Mader, Niskayuna, New York 12309 (US)
(74) Representative: Illingworth-Law, William Illingworth

(57) **Abstract**

Methods and apparatus for performing an inspection using an eddy current coil are described. In one embodiment, the method is for inspecting an embossment of a wheel for a gas turbine using an inspection assembly (10). The inspection assembly includes a fixture and an eddy current coil. The fixture includes a stability support (22) and support bearings (56). The method includes positioning the assembly so that the eddy current coil is over the surface to be inspected and so that the support bearings are on the surface, and maintaining the stability support against a support surface.

## Description

### BACKGROUND OF THE INVENTION

This invention relates generally to inspections apparatus and methods and more particularly, to eddy current probes and apparatus for performing inspections.

Eddy current probes for the inspection of accessible surfaces have been in use for many years and utilize various eddy current coil configurations. These coil configurations include single and multiple coil configurations. For example, multiple eddy current coils can be arranged in an array to scan an inspection surface, and data collected during the scan can converted to an image for review and evaluation.

Inspecting less accessible surfaces with an eddy current probe typically requires at least some disassembly of components adjacent the inspection surface. For example, to inspect an embossment of a first stage gas turbine wheel, at least some components adjacent the embossment typically are disassembled in order to gain access to the embossment along its length. Such disassembly provides access to the embossment and facilitates accurate scanning along an entire length of the embossment. Such disassembly also facilitates viewing the probe and surface during scanning.

Without disassembling such components, there may be noise signals generated due to variable lift-off of the probe from the surface and wobble of the probe relative to the surface. As a consequence, noise signals may prevent accurate inspection results. Furthermore, without such disassembly, there is no line-of-sight visibility to the embossment region. Disassembling components to perform an inspection, however, adds time and expense to such inspection.

### BRIEF DESCRIPTION OF THE INVENTION

In one aspect, a method for inspecting an embossment of a wheel for a gas turbine using an inspection assembly is provided. The inspection assembly includes a fixture and an eddy current coil. The fixture includes a stability support and support bearings. The method includes positioning the assembly so that the eddy current coil is over the surface to be inspected and so that the support bearings are on the surface, and maintaining the stability support against a support surface.

In another aspect, an inspection assembly for inspecting a surface is provided. The inspection assembly includes a fixture having a handle, a center support, and a base. The center support extends from the handle to the base. The fixture further includes a stability support assembly, and a dual slide block arrangement coupled to a holder for engaging an eddy current coil. The assembly further includes an eddy current coil secured to the holder.

In yet another aspect, an inspection assembly for inspecting a surface is provided. The assembly includes a fixture having a handle, a center support, and a base. The center support extends from the handle to the base. The fixture further includes a stability support assembly, and a dual slide block arrangement coupled to a holder for engaging an eddy current coil. The dual slide block arrangement includes a first block providing axial adjustment of the holder relative to the surface to be inspected. The dual block arrangement further includes a second block providing radial adjustment of the holder relative to the surface to be inspected. The holder includes a pocket for engaging an eddy current coil, and the eddy current coil is secured in the pocket.

### BRIEF DESCRIPTION OF THE DRAWINGS

Embodiments of the present invention will now be described, by way of example only, with reference to the accompanying drawings, in which:
Figure 1 is a perspective view of an eddy current embossment inspection fixture and probe assembly.
Figure 2 is a perspective view of a portion of the fixture shown in Figure 1.
Figure 3 is another view of a portion of the fixture shown in Figure 2.
Figure 4 is yet another view of the portion of the fixture shown in Figure 2.

### DETAILED DESCRIPTION OF THE INVENTION

Set forth below is a description of an eddy current fixture and probe that can be utilized in connection with inspection of an embossment of a gas turbine first stage wheel. Such fixture and probe are not limited to practice with any particular first stage wheel embossment, and certain components of the fixture can be used separately and in connection with other fixture arrangements. Therefore, the following description is by way of example only, and many other fixture and probe configuration are possible depending on a particular surface to be inspected.

Generally, the fixture includes a set of spaced apart ball bearing supports to provide stable scanning of an embossment surface. The fixture also provides mechanical adjustment to position an eddy current probe accurately without a need for visually observing the inspection surface. Such fixture therefore facilitates inspection of remote embossment surfaces without rotor disassembly.

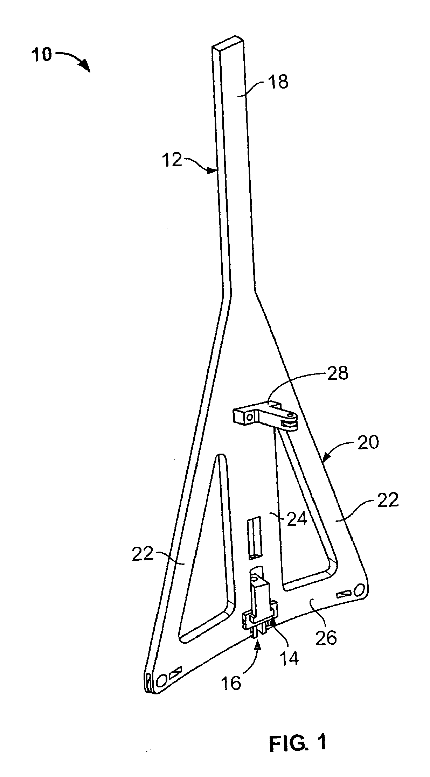

As shown in Figure 1, an assembly 10 includes a probe scanning fixture 12, an adjustable probe body head 14, and a ferrite pot core eddy current (EC) transducer 16, sometimes referred to herein as a sensor. Pot core eddy current transducers (two major components are the magnetic core material and the copper coil) are well known in the art and are commercially available from, for example, Ceramic Magnetics, Incorporated, Fairfield, New Jersey, for ceramic magnetic materials, and Xactex Corporation, Pasco, Washington, for coil windings. By using a pot core eddy current transducer, the inspection described herein can be performed with two circumferential scans. In addition, assembly 10 provides that an inspection of the embossment surface on a first stage wheel can be performed on a rotor that only has its buckets removed from the wheel being inspected. Therefore, when the buckets are removed for a dovetail inspection, an inspection of the embossment surface can be performed without further disassembly.

Fixture 12 includes a handle 18 and a main body 20. Main body 20 includes legs 22 and a center brace 24 that extend to a base 26. A stability support assembly 28 is provided at top of center brace 24. Fixture also includes a dual slide block arrangement that permits offsetting eddy current probe axially relative to fixture so that an adjacent track, or surface, can be scanned.

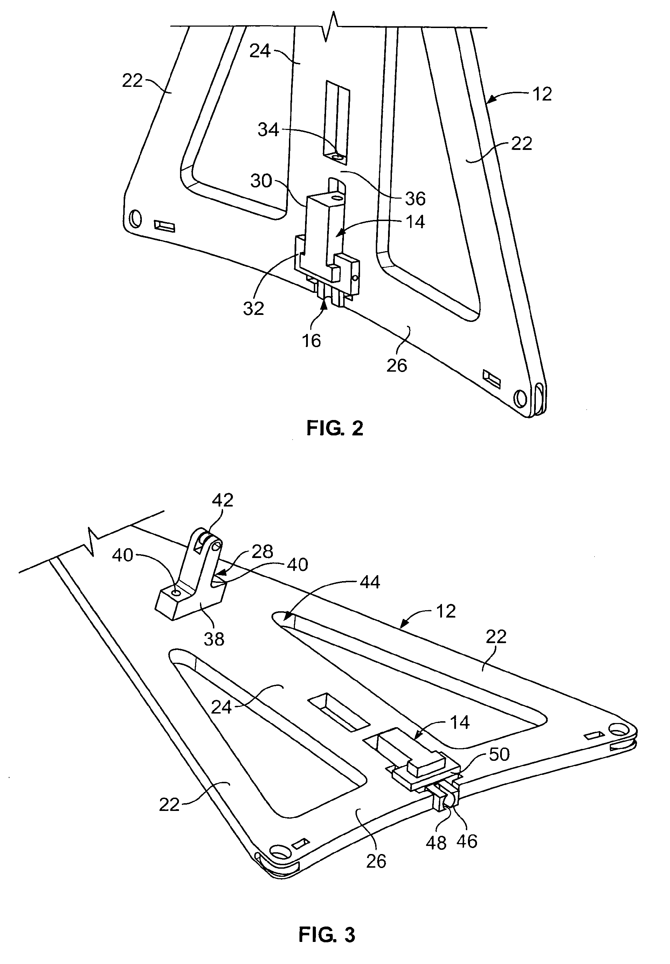

As shown in Figure 2, adjustable head 14 includes a dual slide block arrangement that provides for both axial motion and radial motion of transducer 16 relative to fixture 12. Such dual slide block arrangements are well known in the art and are commercially available from, for example, CBM Fabrications, Ballston Lake, New York. More particularly, head 14 includes a first block 30 providing axial adjustment of transducer 16, and a second block 32 providing radial adjustment of transducer 16, relative to the surface to be inspected. An opening 34 is provided in a cross brace 36 to permit adjustment of probe block 30, as described below in more detail.

As shown in Figure 3, stability support assembly 28 has a T cross-sectional shape support 38 secured to center brace 24 by screws 40. Ball bearing 42 is engaged to support 38 so that ball bearing 42 rolls along a support surface. For example, bearing 42 is positioned to ride on a surface region just below a bottom of a dovetail slot during an inspection operation, and provides stability for an inspection operation. In addition, a reference coil, instrumentation connector, and probe coil connections may be secured to fixture 12 at a location generally indicated by 44.

As also shown in Figure 3, adjustable head 14 includes a holder 46 that has a pocket 48 for housing a pot core eddy current coil. Also, a lip 50 is provided as a mechanical stop to limit axial adjustment of head 14.

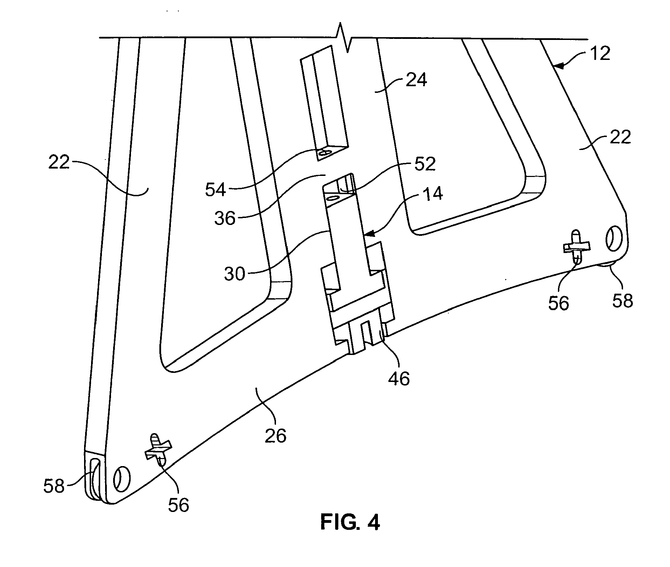

As shown in Figure 4, a mechanical guide 52 extends from cross brace 36 to first block 30 so that radial adjustment of the location of the coil can be made by adjusting a screw 54. In addition, guide ball bearings 56 are provided to run against a lip, and support ball bearings 58 are provided to adjust probe coil clearance relative to the inspection surface.

To perform an inspection, for example, of an embossment of a wheel for a gas turbine using inspection assembly 10, and prior to positioning assembly 10 to perform the inspection, assembly 10 is adjusted so that transducer 16 is at a pre-selected orientation relative to fixture 12. Particularly, the dual slide block arrangement having axial adjustable block 30 and radial adjustment block 32 is adjusted to orient transducer in a desired position. Once adjusted, assembly 10 is positioned so that eddy current coil, i.e., transducer 16, is over the surface to be inspected and so that support bearings 58 are on the surface while maintaining stability support 28 against a support surface. Assembly 10 is then moved along the surface to be inspected so that support bearings 58 roll along the surface being inspected and stability support 28 is maintained in contact with the support surface.

The combination of support 28, and bearings 56 and 58, along with adjustment of head 14, facilitate keeping scanning induced noise to a practical minimum. For example, in inspecting the embossment in a first stage wheel, there are at least two sources of motion-induced noise. A first noise source results from not running smoothly enough on the inspection surface. A second noise source results from wobbling motion transverse to the scan direction. Assembly 10 facilitates minimizing noise from these noise sources

Further, with respect to assembly 10, support ball bearings 58 are spaced from transducer 16. Transducer 16 is approximately centered between supports 22. In this way, if one of supports 22 is raised up due to a local surface irregularity, the displacement at transducer 16 is one-half the displacement at support 22. Furthermore, the angular tilt of transducer 16 from local normality to the inspection surface may also be reduced. Such an arrangement facilitates reducing mechanical motion of sensor 16 relative to the inspection surface, which in turn reduces this source of electrical noise. With respect to wobble motion, use of ball-bearing support 28 near handle 18 provides the support by running on surface just below the dovetail opening on the wheel face.

While the invention has been described in terms of various specific embodiments, those skilled in the art will recognize that the invention can be practiced with modification within the spirit and scope of the claims.

### PARTS LIST

| | |
|---|---|
| 10 | Assembly |
| 12 | Fixture |
| 14 | Head |
| 16 | Transducer |
| 18 | Handle |
| 20 | Main body |
| 22 | Supports |
| 24 | Center brace |
| 26 | Base |
| 28 | Support assembly |
| 30 | Block |
| 32 | Second block |
| 34 | Opening |
| 36 | Cross brace |
| 38 | Support |
| 40 | Screws |
| 42 | Bearing |
| 44 | Location |
| 46 | Holder |
| 48 | Pocket |
| 50 | Lip |
| 52 | Mechanical guide |
| 54 | Screw |
| 56 | Bearings |
| 58 | Bearings |

## Claims

1. An inspection assembly (10) for inspecting a surface, comprising:
a fixture (12) comprising a handle (18), a center support (22), and a base (26), said center support extending from said handle to said base, said fixture further comprising a stability support assembly (28), and a dual slide block (30, 32) arrangement coupled to a holder for engaging an eddy current coil, and
an eddy current coil secured to said holder.

2. An inspection assembly (10) in accordance with Claim 1 wherein said fixture (12) further comprises support legs extending from said handle (18) to respective ends of said base (26).

3. An inspection assembly (10) in accordance with Claim 1 wherein said stability support assembly (28) comprises a support and a ball bearing (42) secured within said support.

4. An inspection assembly (10) in accordance with Claim 1 wherein said dual slide block (30, 32) arrangement comprises a first block providing axial adjustment of said holder (46) relative to the surface to be inspected, and a second block providing radial adjustment of said holder relative to the surface to be inspected.

5. An inspection assembly (10) in accordance with Claim 1 wherein said holder (46) comprises a pocket (48) for engaging an eddy current coil.

6. An inspection assembly (10) in accordance with Claim 1 wherein said fixture (12) further comprises support ball bearings (56) at opposing ends of said base (26), said support ball bearings being adjustable to adjust a coil clearance relative to the surface to be inspected.

7. An inspection assembly (10) in accordance with Claim 1 wherein said fixture (12) further comprises guide ball bearings (58) at opposing ends of said base (26).

8. An inspection assembly (10) for inspecting a surface, comprising:
a fixture (10) comprising a handle (18), a center support (22), and a base (26), said center support extending from said handle to said base, said fixture further comprising a stability support assembly (28), and a dual slide block arrangement (30, 32) coupled to a holder (46) for engaging an eddy current coil, said dual slide block arrangement comprising a first block providing axial adjustment of said holder relative to the surface to be inspected, said dual block arrangement further comprising a second block providing radial adjustment of said holder relative to the surface to be inspected, said holder comprising a pocket (48) for engaging an eddy current coil, and
an eddy current coil secured in said pocket.

9. An inspection assembly (10) in accordance with Claim 8 wherein said fixture (12) further comprises support legs extending from said handle (18) to respective ends of said base (26).

10. An inspection assembly (10) in accordance with Claim 8 wherein said stability support assembly (28) comprises a support (22) and a ball bearing (42) secured within said support.
